Europäisches Patentamt

European Patent Office

Office européen des brevets

(19)

(11) **EP 0 757 259 B1**

(12) **EUROPÄISCHE PATENTSCHRIFT**

(45) Veröffentlichungstag und Bekanntmachung des Hinweises auf die Patenterteilung:
**28.10.1998 Patentblatt 1998/44**

(51) Int Cl.$^6$: **G01S 13/90**

(21) Anmeldenummer: **96112492.2**

(22) Anmeldetag: **02.08.1996**

(54) **Einrichtung zur Bewegungsfehler-Kompensation für ein Radar mit synthetischer Apertur auf der Basis rotierender Antennen (ROSAR) für Hubschrauber**

Device for movement error compensation in a radar with synthetic aperture based on rotating antennas (ROSAR) in a helicopter

Dispositif de compensation d'erreur de mouvement pour radar à ouverture synthétique à base d'antennes tournantes dans un hélicoptère

(84) Benannte Vertragsstaaten:
**DE FR GB IT NL SE**

(30) Priorität: **04.08.1995 DE 19528613**

(43) Veröffentlichungstag der Anmeldung:
**05.02.1997 Patentblatt 1997/06**

(73) Patentinhaber: **Daimler-Benz Aerospace Aktiengesellschaft**
**81663 München (DE)**

(72) Erfinder:
• **Klausing, Helmut, Dipl.-Ing. Dr.**
**82234 Wessling/Hochstadt (DE)**
• **Wolframm, Aribert, Dipl.-Phys.**
**86899 Landsberg (DE)**

(56) Entgegenhaltungen:
**EP-A- 0 634 668        GB-A- 2 003 357
US-A- 4 638 315**

• **KREITMAIR-STECK W ET AL. "HeliRadar-a rotating antenna synthetic aperture radar for helicopter allweather operations" , DUAL USAGE IN MILITARY AND COMMERCIAL TECHNOLOGY IN GUIDANCE AND CONTROL (AGARD-CP-556), DUAL USAGE IN MILITARY AND COMMERCIAL TECHNOLOGY IN GUIDANCE AND CONTROL (AGARD-CP-556), PRATICA DI MARE, ITALY, 20-21 OCT. 1994 , 1995, NEUILLY SUR SEINE, FRANCE, AGARD, FRANCE, PAGE(S) 1 - 8 XP002017411 * das ganze Dokument ***

**Beschreibung**

Die Erfindung bezieht sich auf eine Einrichtung zur Bewegungsfehler-Kompensation gemäß dem Oberbegriff des Anspruchs 1.

Aus der DE 39 22 086 und der Dissertation "Realisierbarkeit eines Radars mit synthetischer Apertur durch rotierende Antennen" von Dr.-Ing. Helmut Klausing - MBB-Publikation, MBB-UA-1150-89 = OTN-029299, 1989, ist ein Radargerät mit einem Sender und einem Empfänger sowie einer Antenne zum Senden und Empfangen von Radarimpulsen bekannt, wobei die Antenne am Ende eines rotierenden Armes, zum Beispiel eines Hubschrauberrotors oder eines Drehkreuzes, oberhalb der Rotorachse angeordnet ist. Ein solches Radargerät mit synthetischer Apertur auf der Basis rotierender Antennen wird als ROSAR-Gerät bezeichnet. Hierbei werden die Empfangssignale demoduliert, zwischengespeichert und anschließend mit Referenzfunktionen korreliert. Diese Referenzfunktionen werden in Abhängigkeit von der Beleuchtungsgeometrie des Radargerätes errechnet oder vorgegeben. Parameter für diese Berechnung bzw. Vorgabe sind die zu vermessenden Entfernungsintervalle, die Sendefrequenz, die Länge des rotierenden Drehannes, der Drehwinkelbereich der Antenne aus dem Signale rückempfangen werden, ferner die Anzahl der Sendeimpulse sowie die Höhe der rotierenden Antenne über Grund. Das Korrelationsergebnis wird dann beispielsweise auf einem Monitor angezeigt.

Ein derartiges Radargerät kann nahezu in Echtzeit im On-line-Betrieb eingesetzt und somit neben der Kartographie, der Hinderniswarnung oder der Landehilfe auch der Zielaufklärung und der Zielverfolgung dienen. Der Prozessor dieses bekannten ROSAR-Gerätes weist mehrere Bausteine auf, um die vielfältigen und komplexen Rechenaufgaben zu unterteilen und damit den On-line-Betrieb zu ermöglichen. Das Ergebnis wird dann für jedes Entfernungsintervall stets durch Korrelation des Empfangssignals mit einer für dieses Entfernungsintervall gültigen Referenzfunktion erhalten.

Aus der EP-A-0 634 668 ist ein Radargerät zur Hinderniswarnung bekannt, das auf diesen Stand der Technik aufbaut, wobei die volle synthetische Aperturlänge bereits innerhalb kurzer Entfernungen erreicht wird.

Nun geht diese ROSAR-Signalverarbeitung jedoch von einer idealen Kreisbahn mit konstanter Winkelgeschwindigkeit aus. Es ist jedoch die Tatsache nicht zu unterschätzen, daß die Blattspitzen von einer regelmäßigen Kreisbahn abweichende, ja infolge der aerodynamischen Verhältnisse auch stochastische Bewegungen vollführen. Diese Abweichungen verursachen zusätzliche Dopplermodulationen des Empfangssignals. Die Referenzfunktion wird jedoch für eine ebene Drehbewegung mit konstanter Winkelgeschwindigkeit berechnet, wodurch sich das Ergebnis der Korrelation zwischen Empfangssignal und Referenzfunktion "verschmiert". Je größer die Abweichung von der idealen Kreisbahn ist, desto schlechter wird das Korrelationsergebnis und damit auch die Lateralauflösung.

Der vorliegenden Erfindung liegt die Aufgabe zugrunde, eine Einrichtung der eingangs genannten Art aufzuzeigen, mit der zur Korrektur die von der idealen Kreisbahn abweichenden Rotorblattbewegungen während eines Umlaufs als Bewegungsfehler vermessen und als reale Korrektursignale in den Prozessor eingegeben werden und so eine wesentlich verbesserte Signalverarbeitung und Bildqualität erzielt wird.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung wird ein Ausführungsbeispiel erläutert. Die Figuren der Zeichnung ergänzen diese Erläuterungen. Es zeigen:

Fig. 1        ein Blockschaltbild des beschriebenen Ausführungsbeispiels in schematischer Darstellung,

Fig. 2a        ein Diagramm der Projektion der Antennenbewegung auf die Erdoberfläche während eines Halbkreises ohne Vorwärtsbewegung des Hubschraubers und mit 50 Kn Vorwärtsgeschwindigkeit,

Fig. 2b        ein Diagramm der Projektion der Antennenbewegung auf die Erdoberfläche während der Integrationszeit ohne Vorwärtsbewegung des Hubschraubers und mit 50 Kn Vorwärtsgeschwindigkeit,

Fig. 3a        eine Schemaskizze bezüglich der dreidimensionalen Aufspaltung der Vorwärtsgeschwindigkeit,

Fig. 3b        eine Schemaskizze beziiglich der vektoriellen Addition der tangensialen Hubschrauber-Geschwindigkeitskomponenten zur Antennen geschwindigkeit,

Fig. 4        eine Schemaskizze bezüglich der Verschiebung des Antennenleuchtfleckes auf der Erdoberfläche durch den Hubschrauber-Rollwinkel,

Fig. 5        eine Schemaskizze bezüglich der Verschiebung des Antennenleuchtfleckes auf der Erdoberfläche durch den Hubschrauber-Nickwinkel,

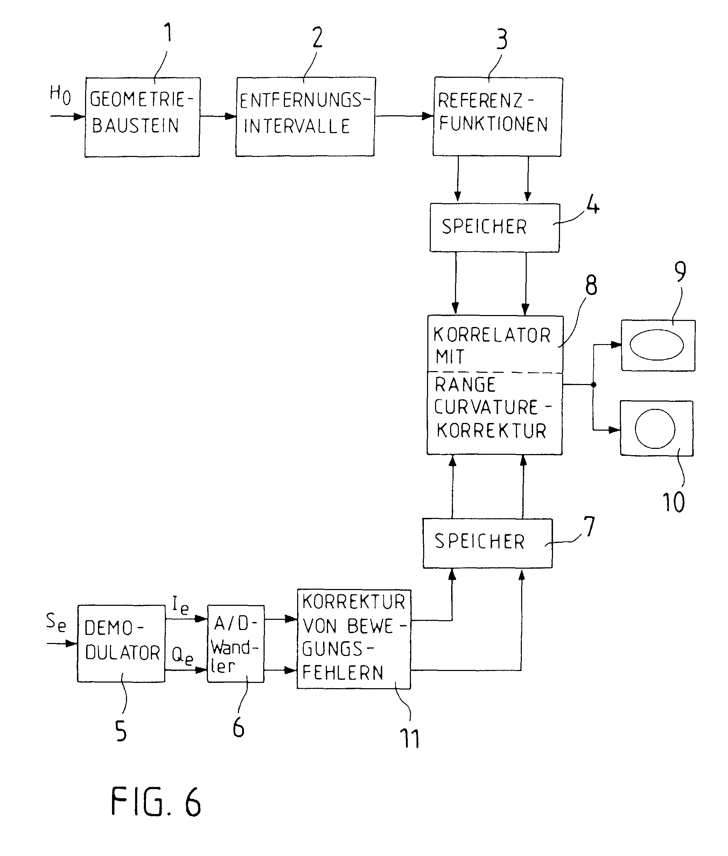

Fig. 6    ein Blockschaltbild des bisherigen Standes der Technik in schematischer Darstellung.

Zur Identifikation und Klassifizierung auftretender Phasenfehler infolge der Abweichungen von der idealen Kreisbahn eines Hubschrauber-Rotorblattumlaufs wird nachfolgend ein Ausführungsbeispiel mit den in den Tabellen angegebenen Eingangsparametern beschrieben.

| Eingangsparameter | | | |
|---|---|---|---|
| Drehfrequenz | $f_{Dreh}$ | 6,375 | Hz |
| Winkelgeschwindigkeit | $\omega_o = 2\pi \cdot f_{Dreh}$ | 40,06 | $s^{-1}$ |
| Länge des Antennenarmes | L | 1,5 | m |
| Vorwärtsgeschwindigkeit des Helikopters | $v_H$ | | |
| - min: | | 10 | Kn (1Kn = 1,852 Km/h) |
| - max: | | 50 | Kn (1Kn = 1,852 Km/h) |
| Öffnungswinkel der Antenne in Azimut | $\gamma$ | 45 | ° |
| Bildwinkel | | 75 | ° |
| Wellenlänge | $\lambda$ | 0,006666 | m |

Als abgeleitete Parameter ergeben sich daraus:

| Abgeleitete Parameter | | | |
|---|---|---|---|
| Integrationsdauer | $T_S$ | 19,61 | ms |
| Geschwindigkeit der Antenne | $v_A$ | 60,08 | $ms^{-1}$ |
| Dopplerbandbreite (nominal) | $B_D$ | 13795,8 | Hz |
| Referenzfunktion (nominal) | | 271 | komplexe Stützstellen |

Die Vorwärtsgeschwindigkeitsbewegung eines Hubschraubers erzeugt die größten Phasenfehler, die kompensiert werden müssen. Diese Vorwärtsgeschwindigkeit verformt die Kreisbewegung der Antennen sehr stark in eine spiralförmige Bewegung (Zykloid) auf der Erdoberfläche. Die Bewegungsgleichungen werden parametnsch angegeben und lauten:

$$x = L \cdot \cos(\overline{\omega}_o \, t)$$

$$y = L \cdot \sin(\overline{\omega}_o \cdot t) + v_H \cdot t$$

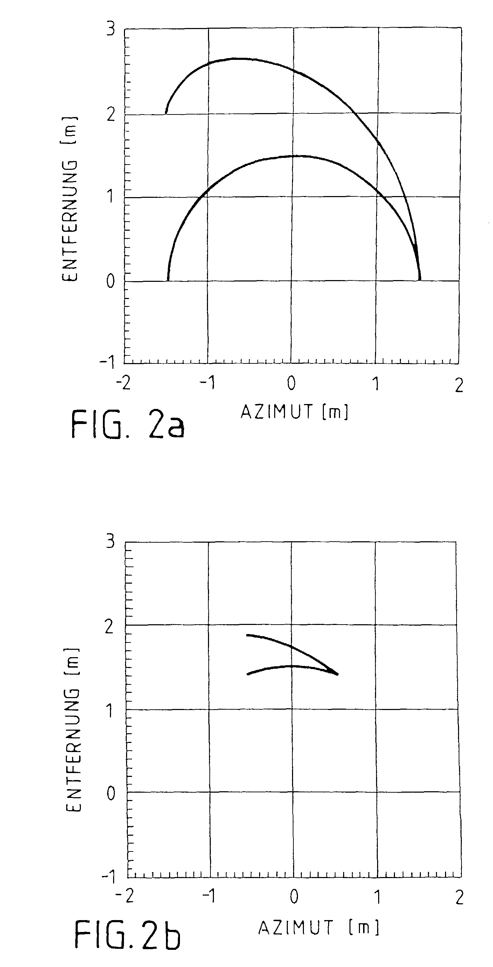

In der Fig. 2a wird diese Bewegung im Vergleich zu einer perfekten Kreisbewegung für einen Halbkreis gezeigt. Dies bedeutet - je nach gewünschter Auflösung - daß kreisrunde Entfernungsringe sich auf mehr als eine Abtastzeit (Auflösungszelle) während einer Drehung des Antennenkreuzes verteilen.

In der Fig. 2b ist die Abweichung während der Integrationsdauer $T_S$ veranschaulicht. Mit obigen Eingangsparametern bewegt sich der Hubschrauber ca. 0,5043 m während der Integrationsdauer nach vorn. Dies entspricht etwa 80 Wellenlängen. Anzuführen ist noch, daß bei den Betrachtungen lediglich die Vorwärtsgeschwindigkeitsbewegung des Hubschraubers angesprochen ist. Die Auswirkung auf die einzelnen Entfernungsringe ist natürlich abhängig vom Depressionswinkel. Ferner ist der Einfluß auf die einzelnen Auflösungswinkel auch vom azimutalen Drehwinkel abhängig.

Die Vorwärtsbewegung des Hubschraubers hat auf jede Auflösungszelle eine Auswirkung, die vom Depressionswinkel (Elevation) und Drehwinkel (Azimut) abhängt. In Fig. 3a ist die Situation für einen beliebigen Punkt auf der Erdoberfläche dargestellt. Dabei wird die Vorwärtsgeschwindigkeit dreidimensional in seine Komponenten in Blickrichtung der Antenne und orthogonal dazu die Drehrichtung der Antenne aufgespalten. Äquivalent dazu ist die Darstellung einer sich relativ zum Hubschrauber bewegenden Erdoberfläche und eines relativ zur Erdoberfläche stehenden Hubschraubers. In dieser äquivalenten Betrachtungsweise hat dann jeder Punkt auf der Erdoberfläche eine individuelle radiale ($v_{Hr}$) und tangentiale ($v_{Ht}$) Geschwindigkeitskomponente in Bezug auf die rotierende Antenne, die vom individuellen Depressions- und Drehwinkel abhängen.

Die radiale Komponente der Vorwärtsgeschwindigkeit (Geschwindigkeitskomponente in Blickrichtung der Antenne) hat relativ einfach erklärbare Auswirkungen. Sie verursacht im Empfänger eine Dopplerverschiebung des Emp-

fangssignals:

$$B'_D = 2 \cdot \upsilon_{Hr}/\lambda \cdot \cos(\overline{\omega}_o \cdot t) \cdot \cos\varepsilon$$

Diese Dopplerverschiebung ist maximal, wenn die Antenne exakt in Flugrichtung des Hubschraubers gerichtet ist und ergibt ein 7716.7 Hz-Signal. Eine Dopplerverschiebung des Empfangssignals im Frequenzbereich entspricht einer Ortsverschiebung des Bildes. Wird im vorliegenden Falle von einer Sendebandbreite von ca. 150 MHz ausgegangen, so ist die momentane Empfangsbandbreite in einem FMCW-System mit Derarnp-on-Receive knapp 30 MHz und die A/D-Wandlerrate mindestens 60 MHz. Mit einem Empfangstor von 10 μsec entsprechend 1,5 km in Schrägentfernung ergeben sich mindestens 600 reelle Abtastwerte. Hieraus folgt, daß einem einzelnen Abtastwert eine momentane Bandbreite von ca. 50 kHz entspricht. Damit ist aber nun zu erkennen, daß die vorstehend berechnete maximale Dopplerverschiebung von 7716.7 Hz einer Verschiebung von einem Sechstel einer Abtastzelle entspricht und nicht unbedingt immer korrigiert werden muß. Dieser Vorgang nimmt kontinuierlich von der am weitesten entfernten Auflösungszelle zum Hubschrauber hin ab. Direkt unter diesem Hubschrauber tritt keine Verschiebung mehr auf, weil hier die radiale Komponente gleich Null ist. Es ergibt sich also hier eine kaum wahrnehmbare Verzerrung der Bildachse. Größer ist dieser Effekt jedoch nach der Korrelation, weil alle Punkte am Boden bis zu einem halben Meter eine Verschlechterung der Auflösung in der Entfernung haben können, wenn die Verschiebung nicht vorher durch Interpolation rückgängig gemacht worden ist (Motion-Compensation). Die fiir die Korrelation herangezogenen Abtastwerte haben sich nämlich während einer synthetischen Apertur inzwischen bis zu einem halben Meter verschoben. Diese "Verschmierung" kommt noch zusätzlich zur theoretischen Auflösung hinzu und ist sicherlich zu groß um noch toleriert werden zu können.

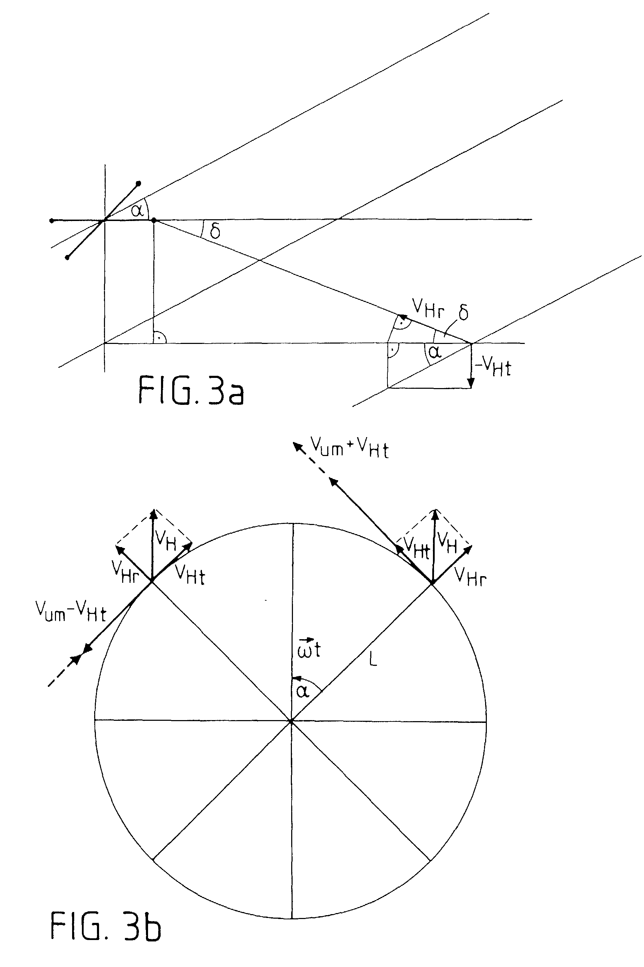

Eine ganz andere Auswirkung hat die zur Blickrichtung orthogonale Geschwindigkeitskomponente, wie in Fig. 3b veranschaulicht ist. Diese beeinflußt ganz entscheidend den Aufbau der synthetischen Apertur und damit auch den Korrelationsalgorithmus. Geht man davon aus, daß sich die Geometrie nicht wesentlich während einer synthetischen Apertur geändert hat, so ist jedoch die Änderung der Dopplerfrequenz pro Zeiteinheit für ein individuelles Punktziel vom Drehwinkel abhängig. Es ergibt sich für die Dopplerfrequenz eines Punktzieles:

$$f_D = 2/\lambda \cdot (\upsilon_A \pm \upsilon_H \cdot \sin(\overline{\omega}_o \cdot t))$$

Diese Abhängigkeit vom Drehwinkel ergibt sich dadurch, daß die Punktziele auf der Erdoberfläche auf der einen Seite des Flugweges der Antenne - bezüglich der tangentialen Komponente - entgegenkommen (daher das + in obiger Gleichung) und auf der anderen Seite sich von dieser entfernen (Minuszeichen). Dabei ist natürlich von der einen zur anderen Seite ein stetiger Übergang gegeben.

Ein weiterer Effekt ist die Erhöhung der momentanen Dopplerbandbreite auf einer Seite des Flugweges und der Erniedrigung desselben auf der anderen Seite. Da im vorliegenden Ausführungsbeispiel die Antenne einen Öffnungswinkel von $\gamma = 45°$ aufweist und ab einem Drehwinkel von $\overline{\omega}_o \cdot t = 45°$ mit dem Aufbau der synthetischen Apertur begonnen wird, macht dieser Effekt sich ziemlich bemerkbar und ergibt hierfür:

$$B'_D = 2\,\upsilon_H/\cdot(\sin(\overline{\omega}_o \cdot t + \lambda/2) - \sin(\overline{\omega}_o \cdot t - \lambda/2))$$

$$= 2 \cdot \upsilon_H/\lambda \cdot (0.9239 - 0.3827) = 2 \cdot \upsilon_H / \lambda \cdot 0.5412 = 9754.6\ \text{Hz}.$$

Obwohl ein Teil der abgetasteten Information gar nicht verwertet wird, (weil außerhalb des Bildfeldes) muß dieser Teil trotzdem abgetastet werden. Wird nämlich diese reale momentane Dopplerbandbreite nicht korrekt abgetastet, so ergeben sich spektrale Faltungsprodukte, die die theoretische Auflösung des ROSAR stark verschlechtern. Blickt die Antenne nach vorne, so erhöht sich die Dopplerbandbreite lediglich um 1372 Hz. Da die Pulswiederholfrequenz $f_p$ sich nach der höchsten Dopplerbandbreite richten muß, erhöht sich somit die normale Pulswiederholfrequenz anteilig (wenn erwünscht auch geschwindigkeitsproportional) auf mindestens

$$f_p = 23550,4\ \text{Hz}.$$

Auf die zusätzliche Dopplerbandbreite macht sich der Depressionswinkel von 10° oder 15° lediglich mit ca. 3% Verminderung bemerkbar. Damit ergibt sich die maximale Dopplerbandbreite oder minimale Pulswiederholfrequenz zu $f_r = 23205.3$ Hz. Wird die Pulswiederholfrequenz auf 24 kHz festgelegt, so ergibt sich nur ein "Oversample Ration" von 1.034. Dies ist informationstheoretisch sehr knapp.

Damit hat die synthetische Apertur 471 Stützstellen und die Erdoberfläche wird von einer Antenne durch 2 * 471 = 942 Pulse beleuchtet.

Korrigiert werden muß die Abweichung von der Kreisbahn bis auf $\lambda/8$ hinab, d.h. bis auf 0.0008333 m. Dies wiederum bedeutet, daß die Vorwärtsgeschwindigkeit bis auf $\lambda/8$ innerhalb der Integrationsdauer gemessen werden muß. Die sich daraus ergebende absolute Meßgenauigkeit beträgt 0.0425 m/sec oder 0.153 km/h. Bei 50 kn Vorwärtsgeschwindigkeit entspricht dies 0.165%. Entscheidend ist hier jedoch nicht die relative Meßgenauigkeit in Prozent sondern die absolute Meßgenauigkeit, denn auch bei einer geringeren Vorwärtsgeschwindigkeit muß die Abweichung bis auf $\lambda/8$ gemessen werden. Da die standardmäßige Navigationsausrüstung - wie GPS, INS etc.- diese geforderte Meßgenauigkeit nicht leisten kann, sondern um einen Faktor 2 bis 3 schlechter ist (ca.0,4 km/h), müssen zusätzliche Meßmethoden die Meßgenauigkeit erhöhen.

Die Vorwärtsgeschwindigkeit ist aus der Dopplerverschiebung eines nichtmodulierten (CW-)Sendesignals bestimmbar. Hierbei wird das ROSAR-Sendesignal - beispielsweise der obersten Antenne - verwendet, jedoch ist dann die Standard-FM-Modulation abzuschalten und es müssen mindestens soviel Pulse (ca. 50 - 100) genommen werden, wie zum "Doppler Beam Sharping" benötigt werden.

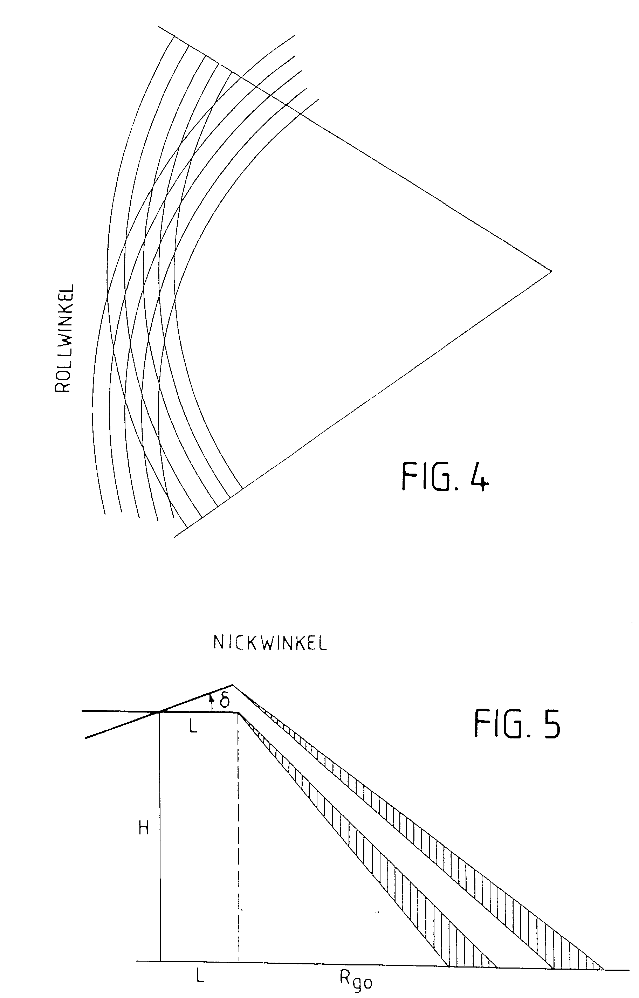

Weiterhin sind Korrekturen der Einflüsse durch die Roll- und die Nickbewegung vorzunehmen. Die Rollbewegung des Hubschraubers verursacht eine Schrägstellung der Antennenkreuzebene. Dies zieht aber eine Verschiebung des Antennenleuchtfleckes auf der Erdoberfläche nach sich, - wie in Fig. 4 veranschaulicht ist -. Dabei werden die vorher konzentrischen Kreisringe so verbogen, daß beispielsweise der rechts vom Hubschrauber liegende ausgeleuchtete Streifen zum Flugkörper hingezogen wird und der links liegende weggeschoben wird. Wenn diese unerwünschte Bewegung nicht korrigiert wird, läuft der von der Antenne beleuchtete Streifen aus dem zeitlichen Empfangstor heraus.

Hat eine Antenne einen Öffnungswinkel von beispielsweise 2.5° und beträgt der Rollwinkel ebenfalls 2.5°, dann fällt ein großer Teil des abzubildenden Streifens am Bildrand in das Antennengewinnminimum. Dies ergibt jedoch nach dem Prozessieren ein Bild mit großen schwarzen Streifen zum Bildrand hin. Größere Rollwinkel vergrößern die schwarzen Streifen noch. Um dem abzuhelfen muß das Empfangstor von Puls zu Puls im Empfänger zeitlich vor- oder nachgestellt werden.

Dies kann - beispielsweise nach der Pulskompression - digital geschehen. Da zur Prozessierung eines Kreissegmentes jedoch nur zeitlich konstante Entfernungsabtastwerte in Azimut verwendet werden, bedeutet dies, daß die benötigten Daten von verschiedenen Antennen je nach Rollwinkel mittels Interpolation "zusammengestückelt" werden müssen. Voraussetzung bei einem solchen Konzept ist jedoch, daß bei verteilten Sendern und Empfängern diese kohärent aneinander angebunden sind und gleiche Sendefrequenz haben.

Was nun die Nickbewegungen des Hubschraubers betrifft, so ist eine solche unter all den anderen Störungen die unkritischste. Durch sie wird lediglich die von der Antenne beleuchtete Fläche gleichmäßig über die gesamte Bildfläche nach vorn oder nach hinten verschoben, wie dies in Fig. 5 veranschaulicht ist. Um den Effekt zu kompensieren wird das Empfangstor im Empfänger entsprechend vor- oder nachgestellt. Dies zieht normalerweise jedoch keine Änderungen im Prozessor nach sich, wenn die Referenzfunktion fiir alle Entfernungen dieselbe ist.

Zu betrachten sind jetzt noch die Einflüsse der Schwingungen des Antennenkreuzes, die man in drei Komponenten zerlegen kann:

a) in die Drehrichtung der Antennen,

b) senkrecht zur Drehrichtung der Antennen nach oben und nach unten,

c) senkrecht zur Drehrichtung der Antennen nach außen und nach innen, also in Richtung der Zentrifugalkraft.

zu a: Die Schwingungen der Antennen in Drehrichtung sind sogenannte longitudinale Schwingungen. Hierbei ändert sich der geometrische Abstand von Abtastwert zu Abtastwert bei zeitlich konstanten Abtastintervallen.

zu b: Die Schwingungen senkrecht zur Drehrichtung der Antennen nach oben und unten haben je nach Frequenz die gleichen Wirkungen wie die Roll- oder Nickbewegungen. Niederfrequente Schwingungen unter 51 Hz verhalten sich wie Nickbewegungen, höherfrequente dagegen wie Rollbewegungen. Es treten dabei auch die gleichen Probleme - wie beschrieben - auf und müssen praktisch nach den gleichen Methoden kompensiert werden. Schwingungen über 51 Hz mit einer Auslenkung von mehr als 0,1* - dementsprechend $\pm$ 2.6 mm am Ende der Antennenarme müssen gemessen und korrigiert werden.

zu c: Bei diesen Schwingungen ändert sich ständig die Entfernung zum abzubildenden Leuchtfleck auf der Erdoberfläche.

Die Schwingungskomponeten zu a und c verursachen Phasenfehler im klassischen Sinne. Hierbei müssen Auslenkungen von mehr als 0.8 mm korrigiert werden. Sie werden mit einer "Beschleunigungstriade", die starr am Ende des Antennenkreuzes angebracht ist, gemessen. Die erhaltenen analogen Ausgangssignale werden von A/D-Wandlern digitalisiert und in den entsprechenden Algorithmen weiterverarbeitet.

Weiterhin sind die Änderungen der Drehfrequenz zu untersuchen. Bei einer nicht korrigierten Änderung der Soll-Drehfrequenz kommen zwei Effekte zu beachten, es ändert sich nämlich die Länge der Referenzfunktion und noch viel kritischer ist jedoch die durch die Drehfrequenzänderung verursachte Änderung des Anstiegs des Dopplerverlaufs. Im ersten Fall - also Längenänderung der Referenzfunktion - kann der Effekt vernachlässigt werden, denn die durch ihn verursachte Auflösungsverbesserung oder -verschlechterung liegt lediglich in einem Bereich von ± 2%. Dagegen verursacht eine Änderung der Drehfrequenz von beispielsweise 1% einen Phasenfehler von von ca. $\lambda/3$ und eine Änderung der Drehfrequenz von 2.9% bedeutet einen Phasenfehler von $\lambda$. Es sind daher Phasenfehler ab $\lambda/8$ entsprechend einer Änderung der Drehfrequenz von ca. 0.4% zu messen und zu korrigieren.

Die ROSAR-Rohdaten unterliegen also - wie vorstehend erläutert - verschiedenen Einflüssen, die eine Verschiebung der A/D-Wandler-Daten dreidimensional im Raum verursachen und müssen daher vor der Korrelation rückgängig bzw. eliminiert werden. Zur Verwendung können verschiedene Methoden herangezogen werden:

Einmal diejenige der Frequenzverschiebung, dann diejenige der Multiplikation mit dem Phasenfaktor und diejenige durch Interpolation. Eine weitere Ausführungsform wäre das Autofokus-Verfahren, hier ist jedoch das Hauptproblem, daß die stetig variablen Dopplerbandbreiten eine optimale (theoretische) azimutale Auflösung im Bild verhindern, bevor die Korrektur durchgeführt wird.

Der bisherige ROSAR-Prozessor ist entsprechend dem ausgewählten Korrekturverfahren um zwei elektronische Korrekturbausteine für die beiden orthogonalen Richtungen zu erweitern, nämlich fiir die Entfernung - also in Blickrichtung der Antennen und für den Azimut - also in Drehrichtung der Antennen. Je nach Prozessortyp wird bei Einsatz eines Standard-Korrelators eine im Zeitbereich verursachte Verschiebung und wenn diese Verschiebung über den ganzen Streifen einem konstanten Wert entspricht, durch eine Multiplikation im Frequenzbereich mit einem Phasenfaktor vorgenommen werden, entsprechend einer Verschiebung um Bruchteile der Wellenlänge $\lambda$. Die Multiplikation findet, - wenn die Daten im Frequenzbereich liegen - nach der ersten FFT statt. Dies ist normalerweise bei Antennenöffnungswinkeln unter etwa 10° möglich.

Was nun die Korrelation betrifft, so wird bei einer solchen im Zeitbereich eine Korrelationsfunktion über die Daten verschoben. Die Untersuchungen haben ergeben, daß die tatsächliche Leistung nur durch Testen feststellbar ist und die hierfür benötigte Rechen-Hardware so groß ist, daß sie in einen Hubschrauber nicht unterzubringen ist.

Die Korrelation im Frequenzbereich reduziert die Anzahl der Operationen, wobei für den Verarbeitungsalgorithmus in Azimut ca. 32 DSPs benötigt werden. Nimmt man beispielsweise den Sharp DSP LH 9124 zur Durchführung der Algorithmen, so werden allein für die FFTs in Azimutrichtung 16 DSPs benötigt. Nimmt man noch einmal die gleiche Anzahl von DSPs für Multiplikationen, Interpolationen etc. und als Sicherheitsfaktor, so ergibt sich, daß für den Verarbeitungsalgorithmus in Azimut ca. 32 DSPs erforderlich sind. Diese kann man normalerweise inklusive schnellen Speicher und Infrastruktur auf ca. 16 Doppel-Europakarten unterbringen kann.

Bei der spektralen Analyse - dem sog. SPECAN-Verfahren - werden die Rohdaten mit einer verlängerten Version des Sendesignals multipliziert und anschließend einer spektralen Analyse unterworfen. Hierbei kann man beim traditionellen SAR erheblich an Rechenoperationen sparen, aber die zum Bildrand auftretenden Auflösungsverluste von 10 bis 20% und eine ebenso hohe Verschlechterung des Signal/Rausch-Verhältnisses haben dazu geführt das dieses SPECAN-Verfahren im traditionellen SAR nicht mehr verwendet wird, weil die Hardware heute so schnell ist, daß die Zeitersparnis in keinem Verhältnis zur Bilddegradierung steht. Für das ROSAR ändert sich jedoch die Situation grundlegend, weil man es hier mit einer extrem variablen Geometrie zu tun hat. Das SPECAN-Verfahren wird öfter in kleinen Schritten wiederholt und so eine Adaption an die variable Geometrie erzielt.

Zur Behebung von Gegebenheiten, die durch die Vorwärtsbewegung des Hubschraubers entstanden sind, kommen zwei Methoden in Frage, einmal 2-dimensionale Interpolation, durch die die Variation der Geometrie soweit rückgängig gemacht wird, daß die übrigbleibenden Fehler die Bildqualität nicht mehr groß beeinflussen. Hier hat sich fiir die Interpolation in der SAR-Bildverarbeitung die Interpolation mittels kubischer Faltung als beste Lösung erwiesen.

Zum anderen läßt sich eine eindimensionale Interpolation in Entfernungsrichtung vornehmen und in der azimutalen Richtung wird der SPECAN-Algorithmus mit variabler Steigung des Dopplersignals angewendet.

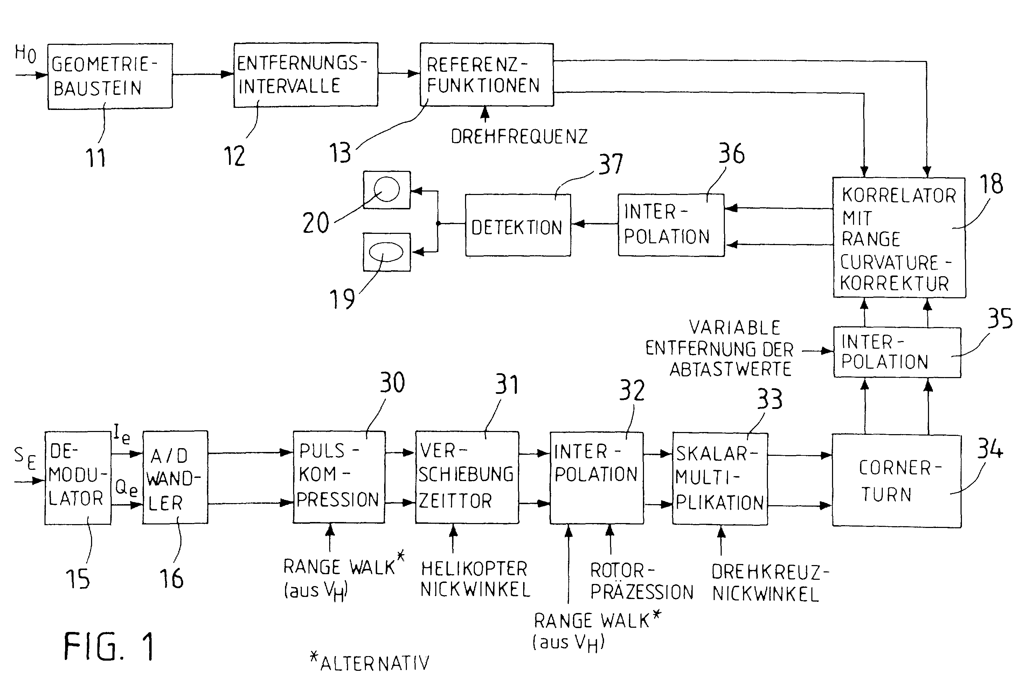

Zur Durchführung der vorstehend aufgezeigten Maßnahmen bzw. zur Lösung der gestellten Aufgabe wird der ROSAR-Prozessor in seiner Basis-Struktur - wie in Fig. 1 veranschaulicht - erweitert, wobei die Daten in der Entfernung mittels "Deramp-on-Receive" komprimiert und zur Pulskompression die analog/digital gewandelten Daten mittels einer FFT transformiert werden.

Als Ergebnis erhält man ein Spektrum, bei dem die Tonhöhe proportional zur Entfernung ist. Jeder spektrale Koeffizient repräsentiert eine Auflösungszelle in der Entfernung und die Amplitude ist proportional zur reflektierten Leistung des Sendesignals.

Beim nächsten Verarbeitungsschritt wird durch eine einfache Indexverschiebung eine Verschiebung des Zeittores vorgenommen, die eine Verschiebung des beleuchteten Flecks auf der Erdoberfläche - verursacht durch einen Nick- oder Rollwinkel des Hubschraubers - rückgängig gemacht. Da die Indexverschiebung nur eine grobe Verschiebung im Raster der Abtastwerte zu muß eine feinere Verschiebung mittels Interpolation erfolgen. Durch diese Interpolation lassen sich beliebig feine Verschiebungen der Daten vornehmen, die zwar rechenintensiv sind, aber nur fiir einen Bruchteil der Daten durchgeführt werden müssen.

Zur Kompensation der durch die Drehkreuznickschwingungen hervorgerufenen Amplitudenschwankungen wird nach der Interpolation eine skalare Multiplikation durchgeführt. Um die Heli-SAR-Daten in der azimutalen Richtung zu prozessieren, müssen die Daten mittels eines großen Speichers oder eines "Corner Turn"- Algorithmus gedreht werden. Dabei entstehen aus den Spalten einer Datenmatrix Zeilen und aus den Zeilen Spalten. Das bedeutet, daß die Datenmatrix um 90° gedreht worden ist.

Nach dem "Corner Turn" wird eine zweite Interpolation durchgeführt, die die Verschiebung der Daten durch die tangentiale Geschwindigkeitskomponente rückgängig macht. Mit eingeschlossen werden können dabei auch die Schwingungen des Antennendrehkreuzes in Drehrichtung.

Hiermit ist die Bewegungskompensation - Motion Compensation - abgeschlossen. Es schließt sich nur noch die schnelle Faltung in Azimut (FFT, Multiplikation mit Referenzspektrum, inverse FFT) an. Als letzte Arbeitsschritte folgen noch einmal eine zweidimensionale Interpolation und die Konvertierung der komplexen Daten in reelle Amplituden-Daten. Die letzte Interpolation ist notwendig, um die bei der Konvertierung der komplexen Daten entstehende Erhöhung der Bandbreite adäquat abzutasten.

## Patentansprüche

1. Einrichtung zur Bewegungsfehler-Kompensation in einem Radar mit synthetischer Apertur auf der Basis rotierender Antennen (ROSAR) für Hubschrauber und deren Flugführung, wobei die kohärent aneinander angebundenen Sende- und Empfangsantennen jeweils auf einem rotierenden Ann zum Aussenden von aufeinanderfolgenden Sendeimpulsen und zum Empfang der rückgestreuten Sendeimpulse als Empfangssignale angeordnet sind wobei das ROSAR Einrichtungen zum Korrelieren der Empfangssignale mit vorgegebenen Referenzfunktionen, sowie Korrektureinrichtungen (18) für Bewegungs- und Krümmungsfehler und elektronische Bausteine für die Bildung von Entfernungsintervallen (12), Demodulation (15) und A/D-Wandler (16) enthält, **dadurch gekennzeichnet, daß**

   dem ROSAR-Prozessor ein elektronischer Baustein (30) zur Pulskompression zugeordnet ist, dessen vom A/D-Wandler (16) eingegebene Daten mittels einer FFT transformiert werden,

   die Signale dieses elektronischen Bausteins (30) einem weiteren elektronischen Baustein (31) zur Verschiebung des Zeittores durch eine Indexverschiebung eingehen, dem zur Feinverschiebung des Zeittores ein erstes Interpolationselement (32) zugeordnet ist, dessen Daten

   zur Kompensierung der Amplitudenschwankungen einer Einrichtung zur skalaren Multiplikation (33) weitergeleitet werden und von dort einem Speicher oder Corner Turn-Baustein (34) eingehen,

   dessen Ausgangsdaten einem zweiten Interpolationselement (35) sowie über den Korrelator (18) zur Kompensierung der Datenverschiebung durch die tangentiale Geschwindigkeitskomponente einem zweiten Interpolations-Baustein (36) zugeführt werden

   und zur Konvertierung der komplexen Daten in reelle Amplitudendaten eine Detektionselektronik (37) zwischen Speicher (18) mit Monitor (19) und einem dritten Interpolations-Baustein (36) geschaltet ist.

2. Einrichtung nach Anspruch 1, **dadurch gekennzeichnet, daß** die in den elektronischen Baustein (30) eingegebenen Daten mittels "Deramp-on-Receive" komprimiert werden.

3. Einrichtung nach Anspruch 1 oder 2, **dadurch gekennzeichnet, daß** für eine zweidimensionale Interpolation die Interpolation in der SAR-Bildverarbeitung mittels kubischer Faltung durchgeführt wird.

4. Einrichtung nach Anspruch 1 oder 2, **dadurch gekennzeichnet, daß** eine eindimensionale Interpolation in Entfernungsrichtung erfolgt und in der azimutalen Richtung der SPECAN-Algorithmus mit variabler Steigung des Dopplersignals angewendet wird.

5. Einrichtung nach Anspruch 1 oder 2, **dadurch gekennzeichnet,** daß zur Messung der durch die Schwingungskomponenten verursachten Phasenfehler am Ende des Antennenkreuzes eine "aus drei zweinander orthogonal gerichteten Sensoren gebildete Beschleunigungstriade" starr angebracht ist.

## Claims

1. Device for movement error compensation in a radar with synthetic aperture based on rotating antennas (ROSAR) for helicopters and the navigation thereof, where the transmitting and receiving antennas connected to one another in coherent manner are in each case disposed on a rotating arm for emitting successive transmitting pulses and for receiving the back-scattered transmitting pulses as receiving signals, and where the ROSAR comprises devices for correlating the receiving signals with predetermined reference functions, as well as correction devices (18) for errors of movement and curvature and electronic modules for the formation of range intervals (12), demodulation (15) and analogue-to-digital converters (16), characterised in that

   associated with the ROSAR processor is an electronic module (30) for pulse compression, of which the data input from the analogue-to-digital converter (16) are transformed by means of FFT,

   the signals from this electronic module (30) go into another electronic module (31) for shifting the time gate using index shifting, with which a first interpolation element (32) is associated for precise shifting of the time gate, the data from which element (32)

   are forwarded to a device for scalar multiplication (33) to compensate for amplitude fluctuations and from there go into a memory or corner turn module (34),

   the output data from which are sent to a second interpolation element (35) and via the correlator (18) to a second interpolation module (36) for compensating the data shift due to the tangential velocity component,

   and an electronic detection system (37) is connected between the memory (18) with its monitor (19) and a third interpolation module (36), for converting the complex data into real amplitude data.

2. Device according to claim 1, characterised in that the data input into the electronic module (30) are compressed using "deramp-on-receive".

3. Device according to claim 1 or 2, characterised in that for two-dimensional interpolation the interpolation is carried out in SAR image processing using cubical foldover.

4. Device according to claim 1 or 2, characterised in that unidimensional interpolation takes place in range direction and in the azimuth direction the SPECAN algorithm is applied with variable doppler signal pitch.

5. Device according to claim 1 or 2, characterised in that to measure the phase errors caused by the oscillation components an "acceleration triad" constituted by three sensors directed orthogonally relative to one another is fixedly mounted at the end of the antenna cross.

## Revendications

1. Dispositif pour la compensation d'erreurs de mouvement dans un radar à ouverture dynamique à base d'antennes tournantes (ROSAR) pour des hélicoptères et la conduite de vol de ceux-ci, les antennes d'émission et de réception liées l'une à l'autre de manière cohérente étant disposées chacune sur un bras tournant pour l'émission d'impulsions d'émission successives et pour la réception des impulsions d'émission réfléchies en tant que signaux de réception, le ROSAR comportant des dispositifs pour corréler les signaux de réception avec des fonctions de référence prédéterminées ainsi que des dispositifs de correction (18) pour les erreurs de mouvement et de courbure et des modules électroniques pour la formation d'intervalles de distance (12), pour la démodulation (15) et des convertisseurs A/N (16), caractérisé par le fait

   qu'un module électronique (30) pour la compression des impulsions est associé au processeur ROSAR, module dans lequel les données transmises par le convertisseur A/N (16) sont transformées au moyen d'une transformée de Fourier rapide,

que les signaux de ce module électronique (30) sont transmis à un module électronique (31) supplémentaire aux fins de décaler la limite de temps par un décalage d'index, module auquel est associé un premier élément d'interpolation (32) pour le décalage fin de la limite de temps et dont les données,

pour la compensation des variations d'amplitude, sont transmises à un dispositif de multiplication scalaire (33) et de là à une mémoire ou à un module "CornerTurn" (34),

dont les données de sortie sont transmises à un deuxième élément d'interpolation (35) et, par l'intermédiaire du corrélateur (18) à un deuxième module d'interpolation (36) pour compenser le décalage des données dû à la composante de vitesse tangentielle

et que pour la conversion des données complexes en données d'amplitude réelles, une électronique de détection (37) est connectée entre la mémoire (18) à moniteur (19) et un troisième module d'interpolation (36).

2. Dispositif selon la revendication 1, caractérisé par le fait que les données transmises au module électronique (30) sont compressées par "Deramp-on-receive".

3. Dispositif selon la revendication 1 ou 2, caractérisé par le fait que pour une interpolation bi-dimensionnelle l'interpolation est effectuée dans le traitement d'image SAR, par convolution cubique.

4. Dispositif selon la revendication 1 ou 2, caractérisé par le fait qu'une interpolation mono-dimensionnelle est effectuée dans la direction de la distance et que l'algorithme SPECAN avec pente variable du signal Doppler est appliqué dans la direction azimutale.

5. Dispositif selon la revendication 1 ou 2, caractérisé par le fait que pour mesurer l'erreur de phase générée par les composantes vibratoires, une "triade d'accélération" formée de trois détecteurs disposés mutuellement à angle droit est montée rigidement à l'extrémité de la croix d'antenne.

EP 0 757 259 B1

$H_0$

GEOMETRIE-BAUSTEIN

ENTFERNUNGS-INTERVALLE

REFERENZ-FUNKTIONEN

11  12  13

DREHFREQUENZ

37  36

20  DETEKTION  INTER-POLATION

19

KORRELATOR MIT RANGE CURVATURE-KORREKTUR  18

VARIABLE ENTFERNUNG DER ABTASTWERTE

INTER-POLATION  35

30  31  32  33

$S_E$  DE-MODU-LATOR  $I_e$ $Q_e$  A/D WAND-LER  PULS-KOM-PRESSION  VER-SCHIEBUNG ZEITTOR  INTER-POLATION  SKALAR-MULTI-PLIKATION  CORNER-TURN  34

15  16

RANGE WALK* (aus $V_H$)  HELIKOPTER NICKWINKEL  ROTOR-PRÄZESSION  DREHKREUZ-NICKWINKEL

RANGE WALK* (aus $V_H$)

FIG. 1

*ALTERNATIV

FIG. 2a

FIG.2b

FIG. 3a

FIG. 3b

ROLLWINKEL

FIG. 4

NICKWINKEL

FIG. 5

$\delta$

L

H

L

$R_{go}$

FIG. 6